# EUROPEAN PATENT SPECIFICATION

(11) **EP 2 552 988 B1**
(45) Date of publication and mention of the grant of the patent: **11.03.2015**
(21) Application number: 11710382.0
(22) Date of filing: 17.03.2011
(51) Int. Cl.: C08G 18/48, C08G 18/20, C08G 18/24, C08J 9/12, C08G 18/10, C08G 101/00

(54) **ONE COMPONENT POLYURETHANE FOAM FORMULATION WITH NON-LIQUEFIED INERT PROPELLANT**
EINKOMPONENTEN-POLYURETHANSCHAUM-FORMULIERUNG MIT NICHT-VERFLÜSSIGTEM INERTEM TREIBMITTEL
FORMULATION DE MOUSSE DE POLYURÉTHANE MONOCOMPOSANT CONTENTANT UN AGENT GONFLANT INERTE NON-LIQUÉFIÉ

(30) Priority: 31.03.2010 US 319577 P
(43) Date of publication of application: 06.02.2013
(73) Proprietor: Dow Global Technologies LLC, Midland, MI 48674 (US)
(72) Inventor: ASSEMAT, Virginie, 67000 Strasbourg (FR); GOELLER, Christian, 67860 Rhinau (FR); HARELLE, Ludovic, 67550 Vendenheim (FR)
(74) Representative: Beck Greener
(86) International application number: PCT/US2011/028751
(87) International publication number: WO 2011/123248

(56) References cited:
- DE-A1- 4 025 843
- US-A- 5 631 319
- US-A- 6 013 691
- US-A- 6 054 499

## Description

### CROSS REFERENCE STATEMENT

This application claims the benefit of U.S. Provisional Application No. 61/319,577, filed March 31, 2010, the entire content of which is incorporated herein by reference.

### BACKGROUND OF THE INVENTION

### Field of the Invention

The present invention relates to a one component polyurethane foam formulation that is propelled and expanded using a non-liquefied inert propellant.

### Description of Related Art

One-component-foam (OCF) formulations have gained popularity especially as adhesive, sealants and insulating materials that are sold in pressurized containers and dispensed by a user through a hose or tube optionally fitted with a dispensing gun. OCF formulations typically employ a polyurethane prepolymer formulation and a propellant that contains hydrocarbons, dimethyl ether and/or compressed liquefied gasses such as fluorinated olefin (HFO) compounds. The propellant expels the polyurethane prepolymer formulation and foams the formulation as it cures with moisture in the atmosphere to form polyurethane foam. The polyurethane foam serves as the adhesive, sealant and/or insulating material.

Propellants have come under scrutiny in recent years for their impact on the environment and atmosphere. Conventional blowing agents have become less desirable from a safety and ecology standpoint. Many of the conventional blowing agents are flammable, causing fire concerns during packaging and dispensing. Halogenated propellants cause concern in regards to global warming potential and ozone depletion potential. Therefore, it is desirable to find new propellants for OCF systems.

US patent 6,013,691 reports use of inert non-liquefied propellants such as carbon dioxide and nitrous oxide in OCF formulations for aerosol containers. These formulations are desirable because they replace the conventional propellants with more ecologically friendly inert gases relative to conventional propellants. However, these inert gases are more challenging to formulate and package into a suitable OCF formulations. For instance, the gases have different solubilities in OCF formulation components. As a result, they tend to produce OCF material with properties that differ from conventional OCF formulations. US patent 6,013,691 reports on a discovery of how to incorporate these desirable yet challenging blowing agents into aerosol containers for dispensing as an OCF. Aerosol containers are relatively small in size, volume and pressure and are popular for do-it-yourself consumers.

Another market for OCF foams besides do-it-yourself consumers is the professional construction market. OCF formulations are typically sold into the professional construction market in larger pressure vessels and at higher pressures than aerosol containers. For instance, professional vessels are commonly 10-15 liters in volume and are pressurized to internal pressures in excess of 15 atmospheres of pressure. In contrast, aerosol containers typically contain orders of magnitude less volume at 2/3 the pressure of the professional vessels. The different volume and pressure in professional OCF vessels creates unresolved challenges for incorporating non-liquefied inert propellants relative to aerosol can OCF formulations. For example, propellant solubilities change due to the different pressure therefore foaming properties will change.

It is desirable, then, to discover a method for employing non-liquefied inert propellants in OCF formulation suitable for use in professional-sized vessels that operate with higher volumes and higher pressures than consumer aerosol can vessels. It is further desirable that such a formulation would produce from the professional-sized vessels OCF that has no visible foam bead shrinkage as well as a similar visual appearance, density and cell structure homogeneity as OCF produced from conventional propellants. What is more, it is desirable that the OCF formulation have a suitable flow rate at operating temperatures.

### BRIEF SUMMARY OF THE INVENTION

The present invention offers a solution to the problem of achieving an OCF formulation in a professional scale pressure vessel that uses a non-liquefied inert propellant at pressures of 20 atmospheres or more and that produces a foam bead that has no visible shrinkage and that has a similar density, visual appearance and cell structure homogeneity as OCF produced from conventional propellants. Moreover, the present invention solves the packaging problems associated with dispensing the formulation at an acceptable flow rate over a temperature range of 5-35 degrees Celsius (°C).

Surprising, the present invention achieves this result by utilizing a special combination of emulsifier, cell opener and surfactant in the OCF formulation.

In a first aspect, the present invention is a one-component-foam formulation comprising an isocyanate compound, a polyol, an amine catalyst, an emulsifier, a cell opener, surfactant and propellant wherein the propellant is present at a concentration in a range of from 5 to 35 weight-percent of the total one-component-foam formulation weight and that is at least 50 weight-percent non-liquefied inert gases based on total propellant weight, the surfactant is a silicone glycol copolymer and the cell opener is present at a concentration in a range from greater than zero weight-percent to less than 0.01 weight-percent based on polyol weight.

In a second aspect, the present invention is an article comprising five liters or more of the one-component-foam formulation of the first aspect within a container compressed to a pressure of at least 15 atmospheres pressure.

In a third aspect, the present invention is a method for dispensing the one-component-foam formulation of the first aspect, the method comprising providing the article of the second aspect and expelling the one component foam formulation from the container through the dispensing means onto a substrate and allowing the one-component-foam formulation to expand into a stable polymeric foam having a density 45 kilograms per cubic meter or less.

The formulation of the present invention is useful to prepare the article of the present invention, which is useful for use in the method of the present invention, which is useful for disposing a polymeric foam adhesive, sealant and/or insulating material.

### DETAILED DESCRIPTION OF THE INVENTION

Test methods refer to the most recent test method as of the priority date of this document when a date is not indicated with the test method number. References to test methods contain both a reference to the testing society and the test method number. The following test method abbreviations and identifiers apply herein: ASTM refers to American Society for Testing and Materials; EN refers to European Norm; DIN refers to Deutsches Institute für Normung; and ISO refers to International Organization for Standards.

"Dimensionally stable to shrinkage" means that a foam dispensed from a pressurized container onto Kraft paper does not shrink to any visible extent noticeable with a non-aided eye over the course of one week at a temperature of 20°C at 50% relative humidity.

"Multiple" means two or more. "And/or" means "and, or as an alternative". All ranges include endpoints unless otherwise indicated.

The one-component-foam (OCF) formulation of the present invention comprises an isocyanate compound, a polyol, an amine catalyst, an emulsifier, a cell opener, a surfactant and a propellant.

The isocyanate compound can be any one or combination of more than one of those commonly used in the industry of OCF formulations. Examples of suitable isocyanate compounds include any one or any combination of more than one of the following: diphenylmethane-4,4' diisocyanate (MDI), toluene diisocyanate (TDI) as well as alicyclic isocyanates and aliphatic isocyanates such as hexamethylene diisocyanate (HMDI). The isocyanate typically is present in a range of 35 to 60 weight-percent of the total OCF formulation weight.

The polyol can be any polyol or combination of polyols used in the industry of OCF formulations. Preferred polyols include compounds having an average molecular weight of less than 10,000. Polyester and polyether polyols are suitable. Especially preferred polyols include polyether polyols having a molecular weight in a range of approximately 1000 and including a plurality of secondary hydroxyl groups. Commercially available polyols suitable for using in the present invention include VORANOL® P1010L polyether diol (1000 Mw) VORANOL® CP1055 polyol, VORANOL® 2000L polyol, VORANOL® CP3055 polyol (VORANOL is a trademark of The Dow Chemical Company), as well as Poly G® 30-168 and Poly G® 20-112 polyether polyols (Poly-G is a trademark of Arch Chemicals, Inc.). The polyol is typically present in a range of 30 to 55 weight-percent of the total OCF formulation weight.

The amine catalyst can be an one or combination of more than one used in the industry of OCF formulations. Examples of suitable amine catalysts include 2,2'-dimorpholinodiethylether) such as that sold under the tradename DABCO® DMDEE (DABCO is a trademark of Air Products and Chemicals, Inc.) or NIAX® DMDEE (NIAX is a trademark of the General Electric Company) or JEFFCAT® DMDEE (JEFFCAT is a trademark of Huntsman Petrochemical Corporation); and 2-(2-diemethylaminoethyloxy)-N,N-dimethylethanamine such as that sold under the tradename NIAX® A-1 or TOYOCAT® ET (TOYOCAT is a trademark of Tosoh Corporation). The amine catalyst is typically present at a concentration of more than zero and less than five weight-percent based on total polyol weight.

The emulsifier serves as a froth promoter and assists in expulsion of the non-liquefied inert gases. Suitable emulsifiers include organo-silicon based additives such as NIAX® FP-01, polyethermodified polysiloxane such as TEGOSTAB® B8255 (TEGOSTAB is a trademark of Goldschmidt GMBH Limited Liability Company). The emulsifier is present at a concentration of greater than zero wt% based on total polyol weight. Using amounts greater than two wt% based on polyol weight generally does not offer much benefit and does increase the formulation cost. Therefore, the concentration of emulsifier is generally greater than zero wt% and at the same time generally three wt% or less, more typically two wt% or less based on total polymer weight.

The cell opener serves to ensure formation of an open cell foam. Closed cell foams tend to suffer from dimensional instability during curing as is generally evident by shrinkage in the foam as it cures. Therefore, it is desirable to ensure the foam cures as an open cell foam. The cell opener is present at a concentration of greater than zero weight percent and at the same time 0.01 wt% or less based on total polyol weight. If the concentration exceeds 0.01 wt% then the foam tends to collapse during curing. Typically, the cell opener is present at a concentration of 0.008 wt% or less, preferably 0.006 wt% or less and most preferably 0.004 wt% or less based on total polyol weight. Suitable cell openers include polydimethylsiloxane materials such as Baysilone® Fluid M100 (Baysilone is a trademark of Bayer Aktiengesellschaft Corporation).

The surfactant serves to facilitate formation and shaping of cells during foam formation. The choice of surfactant is important to the success of the present invention.

The surfactant must be a silicone glycol surfactant such as DABCO® DC198 (DABCO is a trademark of Air Products and Chemicals, Inc.) or TEGOSTAB® B1400 A (TEGOSTAB is a trademark of Evonik Goldschmidt GMBH LLC) and must be present at a concentration of greater than zero wt% based on total polyol weight. There is no known maximum concentration that causes a technical limitation however no further improvement in cell size formation is evident at surfactant concentration greater than about two wt% based on total polyol weight. Therefore, the concentration of surfactant is typically greater than zero wt% and at the same time three wt% or less, more typically two wt% or less based on total polyol weight.

The propellant is particularly desirable because it is primarily (greater than 50 weight-percent based on total propellant weight) non-liquefied inert gas. The propellant can be 75 weight-percent (wt%) or more, preferably 80 wt% or more, more preferably 90 wt% or more, still more preferably 95 wt% or more and can be 100 wt% (entirely) non-liquefied inert gas. Wt% is relative to total propellant weight. Suitable non-liquefied inert gases include any one or combination of more than one of carbon dioxide, nitrous oxide, and nitrogen. If non-liquefied inert gas makes up less than 100 wt% of the propellant then the balance of the propellant can be any additional blowing agent or propellant known in the OCF industry including low molecular weight hydrocarbons, hydrochlorofluorocarbons, hydrofluorocarbons, chlorofluorocarbons, fluoro-olefins and mixtures thereof.

Additional additive may also be present in the OCF of the present invention. Possible additional additives include flame retardants (such as phosphates, chlorinated paraffins, and chlorophosphates. Additional additives may be present at a concentration of up to 60 weight-percent of the total polyol weight.

Surprisingly, the formulation of the present invention is suitable for use in professional dispensing packages where non-liquefied inert propellant pressure and concentration exceeds that of general do-it-yourself consumer aerosol packaging. Despite the higher concentration and pressure of propellant in the professional dispensing packages the present formulation can be dispensed from a professional dispensing package at a consistent flow rate of 100-500 grams per 10 seconds over a temperature range of 5-35 °C throughout essentially the entire volume of the professional dispensing package and produce a quality foam bead that is dimensionally stable to shrinkage, that has a visible appearance of a homogeneous cell size and skin quality to an unaided eye, and that at the same time has a density of 45 grams per liter (g/l) or less, preferably 32 g/l or less and at the same time generally 15 g/l or more.

In that regards, another aspect of the present invention is an article in the form of a professional OCF formulation package. The article comprises three liter or more, typically five liters or more of the OCF formulation of the present invention within a container and compressed to a pressure of at least 15 atmospheres of pressure, typically pressurized to that pressure using the non-liquefied inert propellant. The container volume can be greater than three or five liters and can be ten liters or more, even 15 liters or more in volume. Typically, the container volume is in a range of 10 to 15 liters. The container can be compressed to pressures above 15 atmospheres such as 20 atmospheres or more and is limited by the pressure rating for the container.

Desirably, the article further comprises a hose attached to the pressurized container containing the OCF formulation through which the OCF formulation can be dispensed. The hose desirably has an inner diameter of at least 9.5 millimeters in order to optimally dispense the OCF formulation at a desirable flow rate. The hose further often contains a dispensing trigger or gun at the end remote from the container containing the OCF. The trigger or gun controls dispensing of the OCF formulation from the tank through the tube and allows an operator to direct flow of the OCF formulation to a desired location. Dispensing usually occurs in the form of a bead of foam.

Another aspect of the present invention is a method of dispensing the OCF formulation of the present invention from the article of the present invention. The method includes expelling the OCF formulation through a dispensing means such as a hose or tube often with attached to a gun and controlled by a trigger onto a substrate and allowing the OCF formulation to expand into polymeric foam that is dimensionally stable to shrinkage and that has a density of 45 g/l or less. Typically, the OCF formulation is expelled into the form of a bead that is frothed as the propellant escapes from the formulation, the formulation then forming dimensionally stable polymeric foam. Desirably, the OCF formulation is expelled from the pressurized container at a rate in a range of 100-500 grams per ten seconds as measured in a temperature range of zero to 50 °C, preferably in a range of five to 35 °C.

### Example

The following examples serve to illustrate embodiments of the present invention as opposed to necessarily define the full scope of the present invention.

Use polymeric MDI (VORANATE M229) as an isocyanate component for the OCF formulation.

Prepare a polyol blend formulation by combining the following components in the wt% concentrations listed (wt% relative to total polyol blend weight). The polyol blend of the present invention optimally contains less than 0.07 wt% water based on polyol blend weight.

| **wt%** | **Component** |
|---|---|
| 75.2 | 1000 Mw polyether diol (VORANOL® P1010L) |
| 19.5 | Trichloropropylphosphate |
| 2.0 | organo silicone emulsifier (NIAX® FP 01) |
| 1.3 | bis (2,2-morpholinoetheyl)ether amine catalyst |
| 0.006 | dimethyltin mercaptide (FOMREZ® UL 22) |
| 0.006 | polydimethyl siloxane cell opener (BAYSILONE® M 100) |
| 2.0 | silicone glycol copolymer surfactant (DABCO® DC198) |

| | |
|---|---|
| VORANOL is a trademark of The Dow Chemical Company NIAX is a trademark of General Electric Company FOMREZ is a trademark of Witco Chemical Corporation BAYSILONE is a trademark of Bayer Aktiengesellschaft Corporation DABCO is a trademark of Air Products and Chemicals, Inc. | |

Transfer 2292 grams of the isocyanate from a nitrogen pressurized vessel into a 13.38 liter Worthington non-refillable cylinder with a working pressure of 27 bars. Then transfer 1928 grams of polyol blend into the Worthington non-refillable cylinder from a nitrogen pressurized vessel. Pressurize the Worthington non-refillable cylinder to a pressure of 20 bars with carbon dioxide. Place the cylinder on a roller to mix the components thoroughly through an exotherm peak and then allow the cylinder to cool down to room temperature (approximately 24°C). Pressurize with additional carbon dioxide to a pressure of 16 bars at 24°C. Carbon dioxide tends to dissolve in the formulation until saturation is complete. Therefore, repeat the pressurization process as needed to achieve a stable pressure of 16 bars in the cylinder. Approximately four pressurization steps are typically needed. A total of 465 grams of carbon dioxide are in the cylinder. Add nitrogen to the cylinder to achieve a pressure of 19 bars (19 grams of nitrogen are added). Allow the formulation to equilibrate for 24 hours to allow nitrogen to dissolve into the formulation. The formulation within the cylinder is an example of the OCF formulation of the present invention. The Worthington cylinder containing the formulation is an example of the article of the present invention.

Dispense the OCF formulation from the Worthington cylinder through a hose having a 9.5 millimeter inside diameter and a length of two meters, the hose having a gun or wand on the end to regulate flow of the OCF formulation. The flow rate from the full cylinder is 152 grams per 10 seconds (228 grams per 15 seconds). The dispensed OCF formulation forms a bead of foam that is dimensionally stable to shrinkage. The resulting foam has a homogeneous cell size and skin quality as evaluated with an unaided eye and a density of 42 kilograms per cubic meter.

### Comparative Examples

### Comparative Example A: Absence of Silicone Glycol Surfactant with Increased Cell Opener

Prepare a one component foam formulation and foam in like manner to the above Example except using the following polyol blend formulation, which similarly contains less than 0.07 wt% water:

| **wt%** | **Component** |
|---|---|
| 77.2 | 1000 Mw polyether diol (VORANOL® P1010L) |
| 19.5 | Trichloropropylphosphate |
| 2.0 | organo silicone emulsifier (NIAX® FP 01) |
| 1.3 | bis (2,2-morpholinoetheyl)ether amine catalyst |
| 0.006 | dimethyltin mercaptide (FOMREZ® UL 22) |
| 0.01 | polydimethyl siloxane cell opener (BAYSILONE® M 100) |
| 0 | silicone glycol copolymer surfactant (DABCO® DC 198) |

Fill the cylinder with 3795 grams of polyol blend, 4520 grams of the polymeric MDI, 482 grams of carbon dioxide and 22 grams of nitrogen. The carbon dioxide loading produces a pressure of 18 bars. The nitrogen loading increases the pressure to 20 bars.

Dispense the foam formulation in like manner as the example. Initial flow rate is approximately 201 grams per 10 seconds (302 grams per 15 seconds) of formulation. The expelled formulation collapses and is unable to sustain a froth and cure to a foam bead.

This comparative example illustrates that an absence of the silicone glycol copolymer surfactant and an increase in cell opening to 0.01 wt% results in froth collapse.

### Comparative Example B: Absence of Cell Opener

Prepare a foam in like manner to the above Example except using the following polyol blend formulation, which similarly contains less than 0.07 wt% water:

| **wt%** | **Component** |
|---|---|
| 74.7 | 1000 Mw polyether diol (VORANOL® P1010L) |
| 19.0 | Trichloropropylphosphate |
| 2.0 | organo silicone emulsifier (NIAX® FP 01) |
| 1.3 | bis (2,2-morpholinoetheyl)ether amine catalyst |
| 0.005 | dimethyltin mercaptide (FOMREZ® UL 22) |
| 0 | polydimethyl siloxane cell opener (BAYSILONE® M 100) |
| 2 | silicone glycol copolymer surfactant (DABCO® DC198) |
| 1 | stabilizer B8935) |

| | |
|---|---|
| TEGOSTAB is a trademark of Evonik Goldschmidt GMBH | |

Fill the cylinder with 1918 grams of polyol blend, 2298 grams of the polymeric MDI, 473 grams of carbon dioxide and 12 grams of nitrogen. The carbon dioxide loading produces a pressure of 17 bar. The nitrogen loading increases the pressure to 19 bar.

Dispense the foam formulation in like manner as the example. Initial flow rate is approximately 206 grams per 10 seconds (310 grams per 15 seconds) of formulation. The expelled formulation formed a foam bead that demonstrated poor dimensional stability by shrinking during as it cured.

This comparative example illustrates that an absence of the cell opener results in dimensionally unstable (shrinking) foam.

## Claims

1. A one-component-foam formulation comprising an isocyanate compound, a polyol, an amine catalyst, an emulsifier, a cell opener, surfactant and propellant wherein the propellant is present at a concentration in a range of from 5 to 35 weight-percent of the total one-component-foam formulation weight and that is at least 50 weight-percent non-liquefied inert gases based on total propellant weight, the surfactant is a silicone glycol copolymer and the cell opener is present at a concentration in a range from greater than zero weight-percent to less than 0.01 weight-percent based on polyol weight.

2. The one-component-foam formulation of Claim 1, wherein the propellant is entirely non-liquefied inert gas.

3. The one-component-foam formulation of Claim 1, wherein the non-liquefied inert gases are selected from carbon dioxide and nitrogen.

4. The one-component-foam formulation of Claim 1, wherein the emulsifier and surfactant are both independently present at a concentration in a range from greater than zero weight-percent to two weight percent based on polyol weight.

5. The one-component-foam formulation of Claim 1, wherein the cell opener is a polydimethyl siloxane and the emulsifier is an organosilicon.

6. An article comprising five liters or more of the one-component-foam formulation of Claim 1 within a container compressed to a pressure of at least 15 atmospheres pressure.

7. The article of Claim 6, further comprising a hose that has an inside diameter of at least 9.5 millimeters through which the one-component-foam formulation can be expelled from the container.

8. A method for dispensing the one-component-foam formulation of Claim 1, the method comprising providing the article of Claim 6 and expelling the one component foam formulation from the container through a dispensing means onto a substrate and allowing the one-component-foam formulation to expand into a stable polymeric foam having a density 45 kilograms per cubic meter or less.

9. The method of Claim 8, wherein the one-component-foam formulation is expelled from the container through a tube or hose having an internal diameter of at least 9.5 millimeters so as to form a foam bead.

10. The method of Claim 8, wherein the one-component-foam is expelled at a rate in a range of 100 to 500 grams per ten seconds in a temperature range of zero to 50 degrees Celsius.

## Patentansprüche

1. Eine Einkomponentenschaumformulierung, beinhaltend eine Isocyanatverbindung, ein Polyol, einen Aminkatalysator, einen Emulgator, einen Zellöffner, ein Tensid und ein Treibmittel, wobei das Treibmittel in einer Konzentration in einem Bereich von 5 bis 35 Gewichtsprozent des gesamten Gewichts der Einkomponentenschaumformulierung vorhanden ist, und das sind mindestens 50 Gewichtsprozent nicht verflüssigte inerte Gase bezogen auf das gesamte Gewicht des Treibmittels, wobei das Tensid ein Siliconglycolcopolymer ist und der Zellöffner in einer Konzentration in einem Bereich von mehr als null Gewichtsprozent bis weniger als 0,01 Gewichtsprozent bezogen auf das Polyolgewicht vorhanden ist.

2. Einkomponentenschaumformulierung gemäß Anspruch 1, wobei das Treibmittel gänzlich nicht verflüssigtes inertes Gas ist.

3. Einkomponentenschaumformulierung gemäß Anspruch 1, wobei die nicht verflüssigten inerten Gase aus Kohlenstoffdioxid und Stickstoff ausgewählt sind.

4. Einkomponentenschaumformulierung gemäß Anspruch 1, wobei der Emulgator und das Tensid beide unabhängig in einer Konzentration in einem Bereich von mehr als null Gewichtsprozent bis zwei Gewichtsprozent bezogen auf das Polyolgewicht vorhanden sind.

5. Einkomponentenschaumformulierung gemäß Anspruch 1, wobei der Zellöffner ein Polydimethylsiloxan ist und der Emulgator ein Organosilicium ist.

6. Ein Gegenstand, beinhaltend fünf Liter oder mehr der Einkomponentenschaumformulierung gemäß Anspruch 1 innerhalb eines Behälters, komprimiert auf einen Druck von mindestens 15 Atmosphärendruck.

7. Gegenstand gemäß Anspruch 6, der ferner einen Schlauch beinhaltet, der einen Innendurchmesser von mindestens 9,5 Millimeter aufweist, durch den die Einkomponentenschaumformulierung aus dem Behälter ausgestoßen werden kann.

8. Ein Verfahren zum Ausgeben der Einkomponentenschaumformulierung gemäß Anspruch 1, wobei das Verfahren das Bereitstellen des Gegenstands gemäß Anspruch 6 und das Ausstoßen der Einkomponentenschaumformulierung aus dem Behälter durch ein Abgabemittel auf ein Substrat und das Ausbreitenlassen der Einkomponentenschaumformulierung in einen stabilen Polymerschaum mit einer Dichte von 45 Kilogramm pro Kubikmeter oder weniger beinhaltet.

9. Verfahren gemäß Anspruch 8, wobei die Einkomponentenschaumformulierung aus dem Behälter durch ein Rohr oder einen Schlauch mit einem internen Durchmesser von mindestens 9,5 Millimeter ausgestoßen wird, um eine Schaumkugel zu bilden.

10. Verfahren gemäß Anspruch 8, wobei der Einkomponentenschaum mit einer Geschwindigkeit in einem Bereich von 100 bis 500 Gramm pro zehn Sekunden in einem Temperaturbereich von null bis 50 Grad Celsius ausgestoßen wird.

## Revendications

1. Une formulation de mousse monocomposant comprenant un composé isocyanate, un polyol, un catalyseur amine, un émulsifiant, une substance d'ouverture d'alvéole, un tensioactif et un propulseur, le propulseur étant présent à une concentration comprise dans une gamme allant de 5 à 35 pour cent en poids du poids total de la formulation de mousse monocomposant et qui fait au moins 50 pour cent en poids de gaz inertes non liquéfiés rapporté au poids total de propulseur, le tensioactif étant un copolymère silicone glycol et la substance d'ouverture d'alvéole étant présente à une concentration comprise dans une gamme allant de plus de zéro pour cent en poids à moins de 0,01 pour cent en poids rapporté au poids de polyol.

2. La formulation de mousse monocomposant de la revendication 1, dans laquelle le propulseur est entièrement un gaz inerte non liquéfié.

3. La formulation de mousse monocomposant de la revendication 1, dans laquelle les gaz inertes non liquéfiés sont sélectionnés parmi le dioxyde de carbone et l'azote.

4. La formulation de mousse monocomposant de la revendication 1, dans laquelle l'émulsifiant et le tensioactif sont tous deux indépendamment présents à une concentration comprise dans une gamme allant de plus de zéro pour cent en poids à deux pour cent en poids rapporté au poids de polyol.

5. La formulation de mousse monocomposant de la revendication 1, dans laquelle la substance d'ouverture d'alvéole est le polydiméthylsiloxane et l'émulsifiant est un organosilicium.

6. Un article comprenant cinq litres ou plus de la formulation de mousse monocomposant de la revendication 1 au sein d'un récipient comprimé à une pression d'au moins 15 pressions atmosphériques.

7. L'article de la revendication 6, comprenant en outre un tuyau qui a un diamètre interne d'au moins 9,5 millimètres à travers lequel la formulation de mousse monocomposant peut être expulsée du récipient.

8. Une méthode pour distribuer la formulation de mousse monocomposant de la revendication 1, la méthode comprenant le fait de fournir l'article de la revendication 6 et le fait d'expulser la formulation de mousse monocomposant du récipient à travers un moyen de distribution sur un substrat et le fait de laisser la formulation de mousse monocomposant gonfler pour devenir une mousse polymérique stable ayant une masse volumique de 45 kilogrammes par mètre cube ou moins.

9. La méthode de la revendication 8, dans laquelle la formulation de mousse monocomposant est expulsée du récipient à travers un tube ou un tuyau ayant un diamètre interne d'au moins 9,5 millimètres de façon à former une bille de mousse.

10. La méthode de la revendication 8, dans laquelle la mousse monocomposant est expulsée à une vitesse comprise dans une gamme allant de 100 à 500 grammes toutes les dix secondes dans une gamme de températures allant de zéro à 50 degrés Celsius.
